# EUROPEAN PATENT SPECIFICATION

(11) **EP 3 468 248 B1**
(45) Date of publication and mention of the grant of the patent: **07.10.2020**
(21) Application number: 16918591.5
(22) Date of filing: 14.10.2016
(51) Int. Cl.: H04W 28/16, H04W 72/04

(54) **COMMUNICATION METHOD AND DEVICE**
KOMMUNIKATIONSVERFAHREN UND -VORRICHTUNG
PROCÉDÉ ET DISPOSITIF DE COMMUNICATION

(43) Date of publication of application: 10.04.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIN, Yanan, Dongguan Guangdong 523860 (CN); TANG, Hai, Dongguan Guangdong 523860 (CN)
(74) Representative: Manitz Finsterwald Patent- und Rechtsanwaltspartnerschaft mbB
(86) International application number: PCT/CN2016/102174
(87) International publication number: WO 2018/068320

(56) References cited:
- WO-A1-2015/119448
- CN-A- 101 977 386
- CN-A- 103 596 180
- CN-A- 103 987 110
- CN-A- 104 981 021
- US-A1- 2006 109 865
- ZTE: "Geo based Resource Allocation for V2V over PC5", 3GPP DRAFT; R2-163824 GEO BASED RESOURCE ALLOCATION FOR V2V OVER PC5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Nanjing, China; 20160523 - 20160527 22 May 2016 (2016-05-22), XP051105230, Retrieved from the Internet: URL:http://www.3gpp.org/ftp/Meetings_3GPP_ SYNC/RAN2/Docs/ [retrieved on 2016-05-22]

## Description

### Technical Field

The present disclosure relates to the field of communication, and particularly to a communication method and device and a communication system.

### Background

In recent years, along with proposal and development of intelligent transportation systems, the Internet of vehicles has attracted more and more attentions and been researched more and more extensively. The Internet of vehicles, also called a vehicle area network, is a local area network established in vehicles. In the Internet of vehicles, multiple communication manners are mainly adopted and, according to different communication objects, may include communication manners of Vehicle to Vehicle (V2C) communication, Vehicle to Roadside unit (V2R) communication, Vehicle to Pedestrian (V2P) communication, Vehicle to Infrastructure (V2I) communication and the like.

At present, communication technologies applied to the Internet of vehicles mainly include a Vehicular Ad-hoc Network (VANET) and a Long Term Evolution (LTE) network. The VANET mainly includes a vehicular terminal and a Roadside Unit (RSU). The vehicular terminal may provide short-range wireless communication, thereby forming a wireless ad-hoc network. The RSU is connected with a backbone network and has an assistant communication function. Technically, the VANET has the advantages of easiness for deployment, mature technology, capability of supporting V2V and the like, but this technology has the shortcomings of poor extensibility, unpredictable delay, no deterministic Quality of Service (QoS) guarantee and the like. Compared with the VANET, LTE has the advantages of short delay, high transmission rate, wide coverage and the like, but application of LTE to the Internet of vehicles may be confronted with the problems of scarcity of spectrum resources, interference increase, system performance reduction and the like caused by the fact that spectrum resources of an LTE system are very precious and, when LTE is applied to the Internet of vehicles, a large number of vehicle nodes may access increasely the same cell but the total number of resource blocks in the cell is constant.

CN104981021 A discloses a method and apparatus for resource scheduling in Internet of vehicles system. "Geo based Resource Allocation for V2V over PC5" provides consideration on UE geographical information reporting for mode 1 and Geo based resource mapping for mode 2. US 2006/109865 A1 discloses a method for allocating resources in a multicarrier system and transmission apparatus using the same. However, the above mentioned problem still remains unsolved.

### Summary

The invention is defined by the independent claims. The present disclosure discloses a communication method and device which may reduce interference and increase a resource utilization rate.

A first aspect provides a communication method, which may include that: a target terminal receives resource allocation information sent by a network, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal; and the target terminal performs communication by using the target time-frequency resource according to the resource allocation information; and the time-frequency resources allocated for terminals of different types in a same zone in the multiple zones are mutually orthogonal.

In embodiments of the present disclosure, the mutually orthogonal time-frequency resources are allocated for the terminals of the same type in the adjacent zones, so that interference between the terminals of the same type may be reduced and communication efficiency may be improved.

In the embodiments of the present disclosure, the time-frequency resources allocated for the terminals of different types in the same zone are mutually orthogonal, so that communication interference between the terminals of different types may be reduced and the communication efficiency is improved.

In combination with the first aspect or the first possible implementation mode of the first aspect, in a second possible implementation mode of the first aspect, a type of the target terminal may be one of: a vehicular terminal and a cellular terminal.

In combination with any abovementioned possible implementation mode, in a third possible implementation mode of the first aspect, the method may further include that: the target terminal sends a communication request to the network, the communication request being configured to request for allocating, for the target terminal, a time-frequency resource required by communication.

In combination with the third possible implementation mode of the first aspect, in a fourth possible implementation mode of the first aspect, the communication request may include position information of the target terminal, so as to enable the network to determine according to the position information of the target terminal, the target time-frequency resource allocated for the target terminal.

In combination with the third or fourth possible implementation mode of the first aspect, in a fifth possible implementation mode of the first aspect, the communication request may include at least one of: geographical position information of the target terminal, speed information of the target terminal and moving direction information of the target terminal.

In combination with any abovementioned possible implementation mode, in a sixth possible implementation mode of the first aspect, the resource allocation information may include information of a first target time-frequency resource allocated for the target terminal for use in a present zone and information of a second target time-frequency resource allocated for the target terminal for use in a second zone, the second zone may be a zone towards which the target terminal is moving and which is adjacent to the present zone, and the first target time-frequency resource may be mutually orthogonal to the second target time-frequency resource.

In combination with any abovementioned possible implementation mode, in a seventh possible implementation mode of the first aspect, the target terminal may be a vehicular terminal and that the target terminal receives the resource allocation information sent by the network may include that: the target terminal receives the resource allocation information sent by a first RSU, the first RSU being configured to allocate time-frequency resources for vehicular terminals in the cell under the coverage of the base station.

In combination with any abovementioned possible implementation mode, in an eighth possible implementation mode of the first aspect, that the target terminal receives the resource allocation information sent by the network may include that: the target terminal receives the resource allocation information sent by the base station.

A second aspect provides a communication method, which may include that: a network-side device receives a communication request of a target terminal, the communication request being configured to request for allocating, for the target terminal, a time-frequency resource required by communication; and the network-side device sends resource allocation information to the target terminal, the resource allocation information being configured to indicate a target time-frequency resource allocated for the target terminal, the target terminal being located in a cell under coverage of a base station, the cell being divided into multiple zones and time-frequency resources allocated for terminals of a same type in any two adjacent zones in the multiple zones being mutually orthogonal; and the time-frequency resources allocated for terminals of different types in a same zone in the multiple zones are mutually orthogonal.

In the embodiments of the present disclosure, the mutually orthogonal time-frequency resources are allocated for the terminals of the same type in the adjacent zones, so that interference between the terminals of the same type may be reduced and communication efficiency may be improved.

In the embodiments of the present disclosure, the time-frequency resources allocated for the terminals of different types in the same zone are mutually orthogonal, so that communication interference between the terminals of different types may be reduced and the communication efficiency is improved.

In combination with the second aspect or the first possible implementation mode of the second aspect, in a second possible implementation mode of the second aspect, a type of the target terminal may be one of: a vehicular terminal and a cellular terminal.

In combination with any abovementioned possible implementation mode, in a third possible implementation mode of the second aspect, the communication request may include position information of the target terminal, and the communication method may further include that: the network-side device determines according to the communication request, a zone where the target terminal is located; and the network-side device determines the target time-frequency resource according to the zone where the target terminal is located.

In combination with any abovementioned possible implementation mode, in a fourth possible implementation mode of the second aspect, the communication request may include at least one of: geographical position information of the target terminal, speed information of the target terminal and moving direction information of the target terminal.

In combination with the fourth possible implementation mode of the second aspect, in a fifth possible implementation mode of the second aspect, the method may further include that: the network-side device determines according to the communication request, a present zone where the target terminal is located and a second zone towards which the target terminal is moving and which is adjacent to the present zone; and the network-side device determines a first target time-frequency resource allocated for the target terminal for use in the present zone and a second time-frequency resource allocated for the target terminal for use in the second zone, the first target time-frequency resource being mutually orthogonal to the second target time-frequency resource.

In combination with any abovementioned possible implementation mode, in a sixth possible implementation mode of the second aspect, the resource allocation information may include information of a first target time-frequency resource allocated for the target terminal for use in a present zone and information of a second target time-frequency resource allocated for the target terminal for use in a second zone, the second zone may be a zone towards which the target terminal is moving and which is adjacent to the present zone, and the first target time-frequency resource may be mutually orthogonal to the second target time-frequency resource.

In combination with any abovementioned possible implementation mode, in a seventh possible implementation mode of the second aspect, the network-side device may be the base station.

In combination with any abovementioned possible implementation mode, in an eighth possible implementation mode of the second aspect, the target terminal may be a vehicular terminal, the network-side device may be a first RSU, and the first RSU may be configured to allocate time-frequency resources for vehicular terminals in the cell under the coverage of the base station.

In combination with any abovementioned possible implementation mode, in a ninth possible implementation mode of the second aspect, that the network-side device receives the communication request of the target terminal may include that: the first RSU receives the communication request through another RSU.

In combination with any abovementioned possible implementation mode, in a tenth possible implementation mode of the second aspect, the first RSU may belong to a Center RSU (CRSU) set, each CRSU in the CRSU set may correspond to one zone in the multiple zones, and a CRSU may be configured to allocate a time-frequency resource for a vehicular terminal in a corresponding zone.

A third aspect provides a terminal, which includes components configured to execute the method of the first aspect. On the basis of the same inventive concept, since a principle for the terminal to solve the problem corresponds to the solution in the method design of the first aspect, implementation of the terminal may refer to implementation of the method and repetitions will not be elaborated.

A fourth aspect provides a network-side device, which includes components configured to execute the method of the second aspect. On the basis of the same inventive concept, since a principle for the network-side device to solve the problem corresponds to the solution in the method design of the second aspect, implementation of the network-side device may refer to implementation of the method and repetitions will not be elaborated.

### Brief Description of the Drawings

In order to describe the technical solutions of the embodiments of the present disclosure more clearly, the drawings required to be used in the embodiments of the present disclosure will be simply introduced below. It is apparent that the drawings described below are only some embodiments of the present disclosure. Other drawings may further be obtained by those of ordinary skill in the art according to these drawings without creative work.
FIG. 1 is a schematic diagram of an application scenario according to an embodiment of the present disclosure.
FIG. 2 is a schematic diagram of an application scenario according to another embodiment of the present disclosure.
FIG. 3 is a schematic flowchart of a communication method according to an embodiment of the present disclosure.
FIG. 4 is a schematic flowchart of a communication method according to another embodiment of the present disclosure.
FIG. 5 is a structure diagram of a terminal according to an embodiment of the present disclosure.
FIG. 6 is a structure diagram of a network-side device according to an embodiment of the present disclosure.
FIG. 7 is a structure diagram of a terminal according to another embodiment of the present disclosure.
FIG. 8 is a structure diagram of a network-side device according to another embodiment of the present disclosure.

### Detailed Description of the Embodiments

The technical solutions in the embodiments of the present disclosure will be clearly and completely described below in combination with the drawings in the embodiments of the present disclosure. It is apparent that the described embodiments are not all embodiments but part of embodiments of the present disclosure.

It is to be understood that the technical solutions of the present disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS) system and an LTE system .

It is also to be understood that, in the embodiments of the present disclosure, a cellular terminal may be called a terminal, a Mobile Station (MS), a mobile terminal or the like. The cellular terminal may communicate with one or more core networks through a base station. For example, the cellular terminal may be a mobile telephone (or called a "cellular" telephone) or a computer with a mobile terminal.

It is to be understood that, in the embodiments of the present disclosure, a vehicular terminal (also called a vehicular machine) may be an abbreviated name of in-vehicle information, vehicular communication or vehicular entertainment product installed in a vehicle. The vehicular terminal has a function of implementing information communication of services of V2V communication, V2R communication, V2P communication, V2I communication and the like and these services are collectively referred to as Vehicle to Everything (V2X) services.

It is to be understood that, in the embodiments of the present disclosure, a base station may be a Base Transceiver Station (BTS) in the GSM system or the CDMA system, may also be Node B in WCDMA, may also be an Evolutional Node B (eNB or e-NodeB) in the LTE system, and may further be a 5th Generation (5G) base station and New Radio (NR) base station of future evolved technologies. There are no limits made in the present disclosure.

In a related art, a scenario where a user of the Internet of vehicles and a related cellular user multiplex an LTE resource is considered less. In addition, in the related art, during resource multiplexing, an independent LTE resource is usually separated for the user of the Internet of vehicles to use. By such a method, resources may be greatly wasted when there are fewer vehicular terminals and spectral efficiency of a system (i.e., the spectral efficiency of the system) may not be improved. Moreover, the LTE resources may also be limited to be used by a vehicular terminal in a specific zone (for example, nearby an intersection), and the method is too restrictive.

In order to solve the problem, the embodiments of the present disclosure provide a communication method. The communication method may be applied to a scenario where a user of the Internet of vehicles and a user of a cellular network multiplex a time-frequency resource. The main idea of the method is as follows. A cell under coverage of a base station may be divided into multiple zones and there also exist an RSU in the cell under the coverage of the base station. Vehicular terminals and cellular terminals in the multiple zones may multiplex time-frequency resources. The base station may be configured to allocate the time-frequency resources for the cellular terminals and the RSU is configured to allocate the time-frequency resources for the vehicular terminal. The terminals of different types in each zone in the multiple zones may use mutually orthogonal time-frequency resources and the terminals of the same type in adjacent zones in the multiple zones may use mutually orthogonal time-frequency resources. Therefore, interference between the terminals of the same type may be reduced. Moreover, the RSU allocates the time-frequency resources for the vehicular terminals to avoid allocation of the time-frequency resources for the vehicular terminals by use of the base station, so that a load of the base station is effectively reduced.

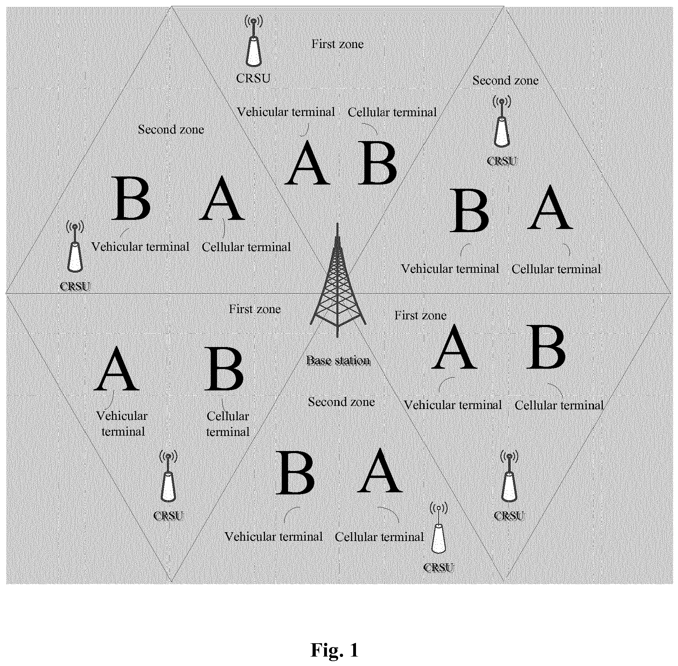

FIG. 1 is a schematic diagram of an application scenario of a communication method according to an embodiment of the present disclosure. In the scenario of FIG. 1, there exist two types of terminals, i.e., a vehicular terminal and a cellular terminal, in a scope of a cell under coverage of a base station. The vehicular terminal and the cellular terminal may multiplex a time-frequency resource. The cell under the coverage of the base station also includes multiple RSUs. The RSUs may be configured to allocate the time-frequency resources for the vehicular terminals and the base station may be configured to allocate the time-frequency resources for the cellular terminals. As at least one alternative embodiment, as shown in FIG. 1, the cell under the coverage of the base station may be divided into multiple zones. Each zone in the multiple zones may include one CRSU and the CRSU may be configured to allocate the time-frequency resources for the vehicular terminals in the zone where the CRSU is located. In each zone in the multiple zones, the time-frequency resources allocated for the vehicular terminals are mutually orthogonal to the time-frequency resources allocated for the cellular terminals. In any two adjacent zones in the multiple zones, the time-frequency resources allocated for the terminals of the same type are mutually orthogonal. That is, the time-frequency resources allocated for the vehicular terminals in two adjacent zones are mutually orthogonal and the time-frequency resources allocated for the cellular terminals in the two adjacent zones are also mutually orthogonal.

It is to be noted that, in the embodiments of the present disclosure, the terminals of the same type may refer to terminals accessing a network of the same type, and the terminals of different types may refer to terminals accessing networks of different types. For example, the terminals of the same type may refer to terminals (which may be called cellular terminals) accessing a cellular network or terminals (which may be called vehicular terminals) accessing the Internet of vehicles. The terminals of different types may refer to terminals accessing the networks of different types. For example, the vehicular terminals and the cellular terminals are terminals of different types.

As at least one alternative embodiment, the CRSU in each zone may be a CRSU configured to manage RSUs in each zone. For example, the CRSU may receive request information configured to request for resource allocation from a vehicular terminal through an RSU in the zone managed by the CRSU, and then allocate a time-frequency resource for the vehicular terminal.

As at least one alternative embodiment, the CRSU may be an ordinary RSU and may also be a dedicated RSU managing an RSU cluster. Or, in the scenario shown in FIG. 1, no CRSU may also be adopted and the RSU receiving the request information of the vehicular terminal is responsible for allocating the time-frequency resource for the vehicular terminal.

As at least one alternative embodiment, the base station may divide the time-frequency resources in the cell under the coverage of the base station into two parts of mutually orthogonal time-frequency resources, for example, dividing into a first time-frequency resource pool and a second time-frequency resource pool, wherein the time-frequency resources in the first time-frequency resource pool are mutually orthogonal to the time-frequency resources in the second time-frequency resource pool. The base station indicates the time-frequency resource pools which can be allocated by the CRSU in each zone in the multiple zones. For example, in FIG. 1, A represents the first time-frequency resource pool, B represents the second time-frequency resource pool and the time-frequency resources in the first time-frequency resource pool are mutually orthogonal to the time-frequency resources in the second time-frequency resource pool. The CRSU in a first zone is configured to allocate the time-frequency resources in the first time-frequency resource pool for the vehicular terminals in the first zone.

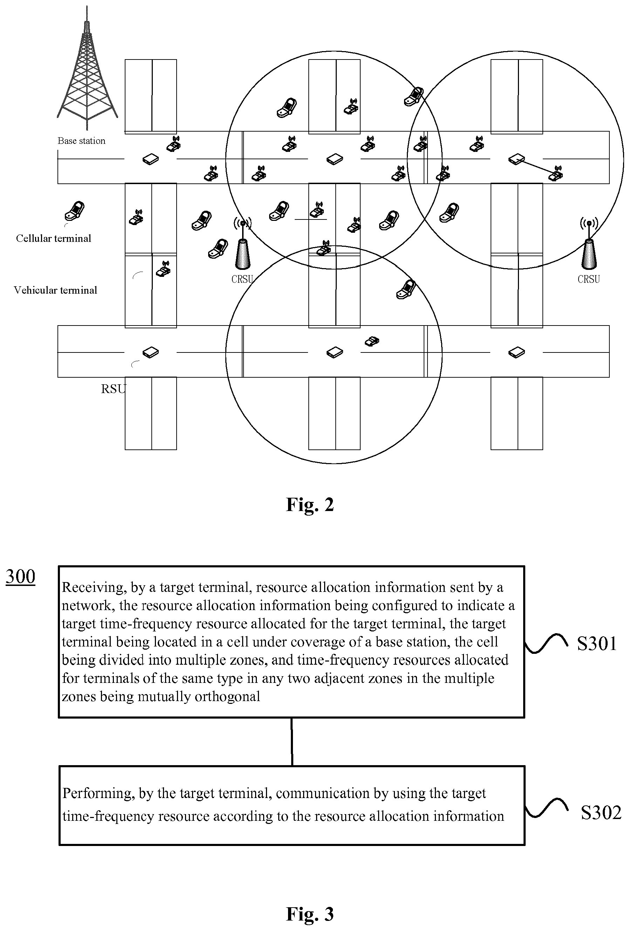

FIG. 2 is a specific embodiment of an application scenario of a communication method according to an embodiment of the present disclosure. For example, for a single cell, there exists a base station in the center of the cell, a plurality of roads exist in the cell under coverage of the base station, an RSU exist at a position of the intersection of the roads and each RSU may cover a round zone centered about an intersection. The multiple RSUs located at the intersections may cover all of the roads. When a vehicular terminal in the cell has a communication requirement and is required to access a network, the vehicular terminal may send a communication request to the RSU. The RSU forwards the communication request to a CRSU of a zone to which the RSU belongs, and then the CRSU allocates a time-frequency resource for the vehicular terminal. In addition, the RSU and the base station may have known about positions of each other.

FIG. 3 is a schematic flowchart of a communication method 300 according to an embodiment of the present disclosure. The method 300 of FIG. 3 may be executed by a target terminal. The target terminal may be a vehicular terminal or a cellular terminal and may also be a terminal of another type. The method 300 includes the following.

In S301, the target terminal receives resource allocation information sent by a network, the resource allocation information being configured to indicate a target time-frequency resource allocated for the target terminal, the target terminal being located in a cell under coverage of a base station, the cell being divided into multiple zones, and time-frequency resources allocated for terminals of the same type in any two adjacent zones in the multiple zones being mutually orthogonal.

As at least one alternative embodiment, the target terminal may be a cellular terminal, a vehicular terminal or a terminal of another type. As at least one alternative embodiment, the network may be a network-side device. The network-side device may include a base station, an RSU or a network-side device of another type.

As at least one alternative embodiment, in the multiple zones, the time-frequency resources allocated for the terminals of the same type in adjacent zones are mutually orthogonal and time-frequency resources allocated for terminals of different types in the same zone are mutually orthogonal. In a resource allocation manner in the embodiment of the present disclosure, signal interference between the terminals of the same type may be reduced and communication quality and resource allocation efficiency are improved.

As at least one alternative embodiment, the target terminal may be located in a first zone in the multiple zones and the first zone may be any zone in multiple cells. For example, the cell under the coverage of the base station may be divided into the multiple zones, the first zone may be one zone in the multiple zone, the first zone may include multiple intersections, one RSU exists at each intersection, each RSU has one unique identifier and all the RSUs in the first zone may be called an RSU cluster or an RSU set. A CRSU for centralized management over the RSUs may be allocated for each RSU cluster. Or, each zone corresponds to one CRSU and the CRSU is configured to manage all the RSUs in the zone.

As at least one alternative embodiment, for example, the target terminal is a vehicular terminal. The resource allocation information may be configured to indicate that the target time-frequency resource in a first time-frequency resource pool is allocated for the vehicular terminal. Time-frequency resources in the first time-frequency resource pool are mutually orthogonal to time-frequency resources in a second time-frequency resource pool. The time-frequency resources in the first time-frequency resource pool are provided for communication between vehicular terminals located in the first zone and cellular terminals in a second zone, and the time-frequency resources in the second time-frequency resource pool are provided for communication between cellular terminals in the first zone and vehicular terminals in the second zone. The first zone is adjacent to the second zone.

As at least one alternative embodiment, the base station may be configured to allocate time-frequency resources for cellular terminals in the multiple zones in the cell under the coverage of the base station. The base station may determine according to position information of the cellular terminal, the zone where the cellular terminal is located, and allocate according to the zone where the cellular terminal is located, the time-frequency resources in the first time-frequency resource pool or the time-frequency resources in the second time-frequency resource pool for the cellular terminal.

In S302, the target terminal performs communication by using the target time-frequency resource according to the resource allocation information.

In embodiment of the present disclosure, the mutually orthogonal time-frequency resources are allocated for the terminals of the same type in the adjacent zones, so that interference between the terminals of the same type may be reduced and communication efficiency may be improved.

As at least one alternative embodiment, the method 300 further includes that: the target terminal sends a communication request to the network, the communication request being configured to request for allocating, for the target terminal, a time-frequency resource required by communication.

As at least one alternative embodiment, in the method 300, the communication request includes position information of the target terminal, so as to enable the network to determine according to the position information of the target terminal, the target time-frequency resource allocated for the target terminal.

As at least one alternative embodiment, in the method 300, the communication request may include at least one of the following information: geographical position information of the target terminal, speed information of the target terminal and moving direction information of the target terminal.

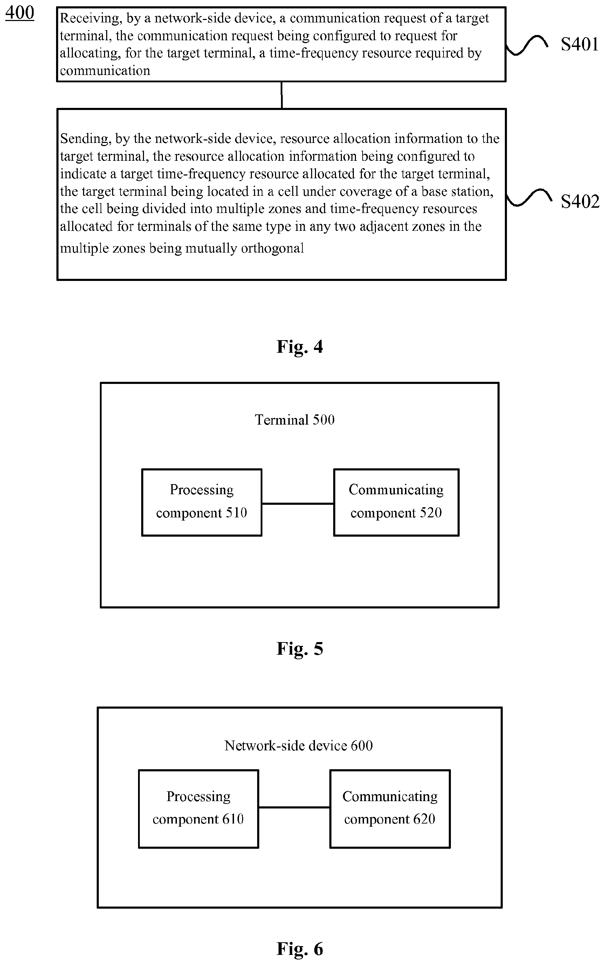

As at least one alternative example, under the condition that the target terminal is a vehicular terminal, FIG. 4 is a structure diagram of a communication request of a vehicular terminal according to an embodiment of the present disclosure. As shown in FIG. 4, the communication request may include vehicle position information, running speed information, predicted running direction information and communication type information of the vehicular terminal. The communication type information may indicate that a communication type requested by the vehicular terminal is at least one of the following communication types: V2V, V2R, V2P and V2I.

Those skilled in the art should know that the vehicular terminal is a device moving at a relatively high speed and the real-time geographical position of the vehicular terminal may be obtained in a manner of Global Positioning System (GPS)-based satellite positioning manner. For example, the vehicular terminal may acquire by a vehicular navigation device information such as geographical position information of a vehicle where the vehicular terminal is located, present running direction information of the vehicle and a predicted running direction of the vehicle.

As at least one alternative embodiment, under the condition that the network is a CRSU, the CRSU, after acquiring the communication request of the vehicular terminal, may determine a geographical position of the vehicle according to the information in the communication request and further determine whether the zone where the vehicular terminal is located is a zone managed by the CRSU. When the zone where the vehicular terminal is located belongs to the zone managed by the CRSU, the CRSU allocates the corresponding time-frequency resource for the vehicular terminal.

Those skilled in the art can understand that a cellular terminal is a handheld device moving at a relatively low speed and the geographical position of the cellular terminal may be obtained by the base station in a network positioning manner. As at least one alternative embodiment, the base station may send geographical position information of the cellular terminal to a CRSU of each zone. The CRSU may determine according to the communication request of the target vehicular terminal and the geographical position information of the cellular terminal, the target time-frequency resource allocated for the target vehicular terminal. For example, if the CRSU of the first zone learns that a first cellular terminal moves from the second zone to the first zone, the first cellular terminal is located in the second zone when the base station allocates a time-frequency resource for the first cellular terminal, the first cellular terminal uses a time-frequency resource in the first time-frequency resource pool, and when the CRSU allocates a time-frequency resource in the first time-frequency resource pool for the target vehicular terminal, the time-frequency resource the same as the time-frequency resource used by the first cellular terminal should be avoided to be allocated for the target vehicular terminal, thereby avoiding interference between the first cellular terminal and the target vehicular terminal during communication.

In the embodiment of the present disclosure, the mutually orthogonal time-frequency resources are allocated for the terminals of different types in the same zone and the mutually orthogonal time-frequency resources are allocated for the terminals of the same type in the adjacent zones, so that interference between the terminals of the same type may be reduced. Moreover, the RSU allocates the time-frequency resource for the vehicular terminal, thereby avoiding allocation of the time-frequency resources for the vehicular terminal by use of the base station and effectively reducing a load of the base station.

As at least one alternative embodiment, in the method 300, the resource allocation information includes information of a first target time-frequency resource allocated for the target terminal for use in a present zone and information of a second target time-frequency resource allocated for the target terminal for use in a second zone, the second zone is a zone towards which the target terminal is moving and which is adjacent to the present zone, and the first target time-frequency resource and the second target time-frequency resource are mutually orthogonal.

In the embodiment of the present disclosure, the network may estimate a moving direction of the target terminal according to the position information contained in the communication request of the target terminal, thereby not only allocating the target time-frequency resource in the present zone for the target terminal, but also allocating a target time-frequency resource in the second zone towards which the target terminal is moving for the target terminal, and improving resource allocation efficiency.

As at least one alternative embodiment, in the method 300, the time-frequency resources allocated for the vehicular terminal in the first zone in the multiple zones is mutually orthogonal to the time-frequency resource allocated for the cellular terminal in the first zone. The first zone is any zone in the multiple zones.

As at least one alternative embodiment, in the method 300, under the condition that the target terminal is a vehicular terminal, and the operation that the target terminal receives the resource allocation information sent by the network includes that: the vehicular terminal receives the resource allocation information sent by a first RSU, the first RSU being configured to allocate time-frequency resources for the vehicular terminal in the cell under the coverage of the base station. As at least one alternative embodiment, the first RSU may be an ordinary RSU and may also be a CRSU in the zone where the target terminal is located.

For example, the first RSU may belong to a CRSU set, each CRSU in the CRSU set corresponds to one zone in the multiple zones and the CRSU is configured to allocate a time-frequency resource for a vehicular terminal in a corresponding zone.

A method 400 of the embodiments of the present disclosure will be introduced below. The method 400 may be executed by a network-side device. The network-side device may be a base station, an RSU, a CRSU or a network-side device of another type. Contents the same as or similar to those in FIG. 3 in the method 400 may refer to related descriptions about FIG. 3 and will not be elaborated herein. The method 400 includes the following.

In S401, the network-side device receives a communication request of a target terminal, the communication request being configured to request for allocating, for the target terminal, a time-frequency resource required by communication.

In S402, the network-side device sends resource allocation information to the target terminal, the resource allocation information being configured to indicate a target time-frequency resource allocated for the target terminal, the target terminal being located in a cell under coverage of a base station, the cell being divided into multiple zones and time-frequency resources allocated for terminals of a same type in any two adjacent zones in the multiple zones being mutually orthogonal.

In the embodiments of the present disclosure, the mutually orthogonal time-frequency resources are allocated for the terminals of the same type in the adjacent zones, so that interference between the terminals of the same type may be reduced and communication efficiency may be improved.

As at least one alternative embodiment, in the method 400, time-frequency resources allocated for terminals of different types in the same zone in the multiple zones are mutually orthogonal.

In the embodiments of the present disclosure, the time-frequency resources allocated for the terminals of different types in the same zone are mutually orthogonal, so that communication interference between the terminals of different types may be reduced and the communication efficiency is improved.

As at least one alternative embodiment, in the method 400, a type of the target terminal comprises one of the following types: a vehicular terminal and a cellular terminal.

As at least one alternative embodiment, in the method 400, the communication request includes position information of the target terminal, and the communication method further includes that: the network-side device determines according to the communication request, the zone where the target terminal is located; and the network-side device determines the target time-frequency resource according to the zone where the target terminal is located.

For example, the position information of the target terminal may include geographical position information of the target terminal, speed information of the target terminal and moving direction information of the target terminal.

As at least one alternative embodiment, in the method 400, the communication request includes at least one of the following information: geographical position information of the target terminal, speed information of the target terminal and moving direction information of the target terminal.

As at least one alternative embodiment, the method 400 further includes that: the network-side device determines according to the communication request, the present zone where the target terminal is located and a second zone towards which the target terminal is moving and which is adjacent to the present zone; and the network-side device determines a first target time-frequency resource allocated for the target terminal for use in a present zone and a second time-frequency resource allocated for the target terminal for use in the second zone, the first target time-frequency resource being mutually orthogonal to the second target time-frequency resource.

For example, the network-side device may determine according to the geographical position information, running direction information and speed information of the target terminal in the communication request, the present zone of the target terminal and the second zone towards which the target terminal is moving and which is adjacent to the present zone.

As at least one alternative embodiment, the resource allocation information includes information of the first target time-frequency resource allocated for the target terminal for use in the present zone and information of the second target time-frequency resource allocated for the target terminal for use in the second zone, the second zone is a zone towards which the target terminal is moving and which is adjacent to the present zone, and the first target time-frequency resource and the second target time-frequency resource are mutually orthogonal.

As at least one alternative embodiment, in the method 400, time-frequency resources in a first zone, allocated for vehicular terminal in the multiple zones and time-frequency resource in the first zone, allocated for cellular terminal are mutually orthogonal, and the first zone is any zone in the multiple zones.

As at least one alternative embodiment, in the method 400, the target terminal is a vehicular terminal, the network-side device is a first RSU, and the first RSU is configured to allocate time-frequency resource for the vehicular terminal in the cell under the coverage of the base station.

As at least one alternative embodiment, in the method 400, the operation that the network-side device receives the communication request of the target terminal includes that: the first RSU receives the communication request through another RSU.

As at least one alternative embodiment, in the method 400, the first RSU belongs to a CRSU set, each CRSU in the CRSU set corresponds to one zone in the multiple zones and the CRSU is configured to allocate a time-frequency resource for the vehicular terminal in the corresponding zone.

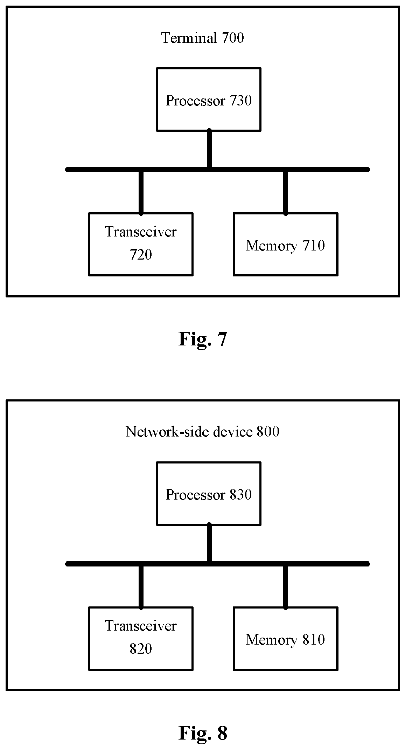

The communication methods of the embodiments of the present disclosure are introduced above in combination with FIG. 1 to FIG. 4. A terminal and network-side device of the embodiments of the present disclosure will be described below in combination with FIG. 5 and FIG. 8 in detail.

FIG. 5 is a schematic structure diagram of a terminal according to an embodiment of the present disclosure. The terminal 500 shown in FIG. 5 includes a processing component 510 and a communicating component 520. The terminal 500 shown in FIG. 5 may be a target terminal.

The processing component 510 is configured to receive through the communicating component 520, resource allocation information sent by a network, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal. The processing component 510 is further configured to perform communication by using the target time-frequency resource according to the resource allocation information.

In embodiment of the present disclosure, the mutually orthogonal time-frequency resources are allocated for the terminals of the same type in the adjacent zones, so that interference between the terminals of the same type may be reduced and communication efficiency may be improved.

As at least one alternative embodiment, time-frequency resources allocated for terminals of different types in the same zone in the multiple zones are mutually orthogonal.

In the embodiment of the present disclosure, the time-frequency resources allocated for the terminals of different types in the same zone are mutually orthogonal, so that communication interference between the terminals of different types may be reduced and the communication efficiency is improved.

As at least one alternative embodiment, a type of the target terminal comprises one of the following types: a vehicular terminal and a cellular terminal.

As at least one alternative embodiment, the processing component 510 is further configured to send through the communicating component 520, a communication request to the network, the communication request being configured to request for allocating, for the target terminal, a time-frequency resource required by communication.

As at least one alternative embodiment, the communication request includes position information of the target terminal, so as to enable the network to determine according to the position information of the target terminal, the target time-frequency resource allocated for the target terminal.

As at least one alternative embodiment, the communication request includes at least one of the following information: geographical position information of the target terminal, speed information of the target terminal and moving direction information of the target terminal.

As at least one alternative embodiment, the resource allocation information includes information of a first target time-frequency resource allocated for the target terminal for use in a present zone and information of a second target time-frequency resource allocated for the target terminal for use in a second zone, the second zone is a zone towards which the target terminal is moving and which is adjacent to the present zone, and the first target time-frequency resource and the second target time-frequency resource are mutually orthogonal.

As at least one alternative embodiment, the target terminal is a vehicular terminal and the processing component 510 is configured to receive through the communicating component 520, the resource allocation information sent by a first RSU, the first RSU being configured to allocate time-frequency resource for the vehicular terminal in the cell under the coverage of the base station.

As at least one alternative embodiment, the processing component 510 is configured to receive through the communicating component 520, the resource allocation information sent by the base station.

FIG. 6 is a schematic structure diagram of a network-side device according to an embodiment of the present disclosure. The network-side device 600 includes a processing component 610 and a communicating component 620.

The processing component is configured to receive through the communicating component, a communication request of a target terminal, the communication request being configured to request for allocating, for the target terminal, a time-frequency resource required by communication.

The processing component is further configured to send through the communicating component, resource allocation information to the target terminal, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal.

In the embodiment of the present disclosure, the mutually orthogonal time-frequency resources are allocated for the terminals of the same type in the adjacent zones, so that interference between the terminals of the same type may be reduced and communication efficiency may be improved.

As at least one alternative embodiment, time-frequency resources allocated for terminals of different types in the same zone in the multiple zones are mutually orthogonal.

In the embodiment of the present disclosure, the time-frequency resources allocated for the terminals of different types in the same zone are mutually orthogonal, so that communication interference between the terminals of different types may be reduced and the communication efficiency is improved.

As at least one alternative embodiment, a type of the target terminal comprises one of the following types: a vehicular terminal and a cellular terminal.

As at least one alternative embodiment, the communication request includes position information of the target terminal, and the processing component is further configured to determine according to the communication request, a zone where the target terminal is located and determine the target time-frequency resource according to the zone where the target terminal is located.

As at least one alternative embodiment, the communication request includes at least one of the following information: geographical position information of the target terminal, speed information of the target terminal and moving direction information of the target terminal.

As at least one alternative embodiment, the processing component is further configured to determine according to the communication request, the present zone where the target terminal is located and a second zone towards which the target terminal is moving and which is adjacent to the present zone and determine a first target time-frequency resource allocated for the target terminal for use in the present zone and a second time-frequency resource allocated for the target terminal for use in the second zone, the first target time-frequency resource being mutually orthogonal to the second target time-frequency resource.

As at least one alternative embodiment, the resource allocation information includes information of the first target time-frequency resource allocated for the target terminal for use in the present zone and information of the second target time-frequency resource allocated for the target terminal for use in the second zone, the second zone is a zone towards which the target terminal is moving and which is adjacent to the present zone, and the first target time-frequency resource and the second target time-frequency resource are mutually orthogonal.

As at least one alternative embodiment, the network-side device is the base station.

As at least one alternative embodiment, the target terminal is a vehicular terminal, the network-side device is a first RSU and the first RSU is configured to allocate the time-frequency resource for vehicular terminal in the cell under the coverage of the base station.

As at least one alternative embodiment, the processing component is configured to receive through the communicating component, the communication request through another RSU.

As at least one alternative embodiment, the first RSU belongs to a CRSU set, each CRSU in the CRSU set corresponds to a zone in the multiple zones and the CRSU is configured to allocate a time-frequency resource for a vehicular terminal in a corresponding zone.

FIG. 7 is a schematic structure diagram of a terminal according to an embodiment of the present disclosure. The terminal 700 shown in FIG. 7 may be a target terminal. The terminal 700 shown in FIG. 7 includes:
a memory 710, configured to store a program;
a transceiver 720, configured to communicate with another device; and
a processor 730, configured to execute the program in the memory 710. When the program is executed, the processor 730 is configured to receive through the transceiver 720, resource allocation information sent by a network, the resource allocation information being configured to indicate a target time-frequency resource allocated for the target terminal, the target terminal being located in a cell under coverage of a base station, the cell being divided into multiple zones, and time-frequency resources allocated for terminals of the same type in any two adjacent zones in the multiple zones being mutually orthogonal. The processor 730 is further configured to perform communication by using the target time-frequency resource according to the resource allocation information.

In embodiment of the present disclosure, the mutually orthogonal time-frequency resources are allocated for the terminals of the same type in the adjacent zones, so that interference between the terminals of the same type may be reduced and communication efficiency may be improved.

As at least one alternative embodiment, time-frequency resources allocated for terminals of different types in the same zone in the multiple zones are mutually orthogonal.

In the embodiment of the present disclosure, the time-frequency resources allocated for the terminals of different types in the same zone are mutually orthogonal, so that communication interference between the terminals of different types may be reduced and the communication efficiency is improved.

As at least one alternative embodiment, a type of the target terminal comprises one of the following types: a vehicular terminal and a cellular terminal.

As at least one alternative embodiment, the processor 730 is further configured to send through the transceiver 720, a communication request to the network, the communication request being configured to request for allocating, for the target terminal, a time-frequency resource required by communication.

As at least one alternative embodiment, the communication request includes position information of the target terminal, so as to enable the network to determine according to the position information of the target terminal, the target time-frequency resource allocated for the target terminal.

As at least one alternative embodiment, the communication request includes at least one of the following information: geographical position information of the target terminal, speed information of the target terminal and moving direction information of the target terminal.

As at least one alternative embodiment, the resource allocation information includes information of a first target time-frequency resource allocated for the target terminal for use in a present zone and information of a second target time-frequency resource allocated for the target terminal for use in a second zone, the second zone is a zone towards which the target terminal is moving and which is adjacent to the present zone, and the first target time-frequency resource and the second target time-frequency resource are mutually orthogonal.

As at least one alternative embodiment, the target terminal is a vehicular terminal and the processor 730 is configured to receive through the transceiver 720, the resource allocation information sent by a first RSU, the first RSU being configured to allocate time-frequency resource for the vehicular terminal in the cell under the coverage of the base station.

As at least one alternative embodiment, the processor 730 is configured to receive through the transceiver 720, the resource allocation information sent by the base station.

FIG. 8 is a schematic structure diagram of a network-side device according to an embodiment of the present disclosure. The network-side device 800 shown in FIG. 8 includes:
a memory 810, configured to store a program;
a transceiver 820, configured to communicate with another device; and
a processor 830, configured to execute the program in the memory 810. When the program is executed, the processor 830 is configured to receive a communication request of a target terminal through the transceiver 820, the communication request being configured to request for allocating, for the target terminal, a time-frequency resource required by communication for the target terminal.

The processor 830 is further configured to send resource allocation information to the target terminal through the transceiver 820, the resource allocation information being configured to indicate a target time-frequency resource allocated for the target terminal, the target terminal being located in a cell under coverage of a base station, the cell being divided into multiple zones and time-frequency resources allocated for terminals of the same type in any two adjacent zones in the multiple zones being mutually orthogonal.

In the embodiment of the present disclosure, the mutually orthogonal time-frequency resources are allocated for the terminals of the same type in the adjacent zones, so that interference between the terminals of the same type may be reduced and communication efficiency may be improved.

As at least one alternative embodiment, time-frequency resources allocated for terminals of different types in the same zone in the multiple zones are mutually orthogonal.

In the embodiment of the present disclosure, the time-frequency resources allocated for the terminals of different types in the same zone are mutually orthogonal, so that communication interference between the terminals of different types may be reduced and the communication efficiency is improved.

As at least one alternative embodiment, a type of the target terminal comprises one of the following types: a vehicular terminal and a cellular terminal.

As at least one alternative embodiment, the communication request includes position information of the target terminal, and the processor 830 is further configured to determine according to the communication request, the zone where the target terminal is located and determine the target time-frequency resource according to the zone where the target terminal is located.

As at least one alternative embodiment, the communication request includes at least one of the following information: geographical position information of the target terminal, speed information of the target terminal and moving direction information of the target terminal.

As at least one alternative embodiment, the processor 830 is further configured to determine according to the communication request, a present zone where the target terminal is located and a second zone towards which the target terminal is moving and which is adjacent to the present zone, and determine a first target time-frequency resource allocated for the target terminal for use in the present zone and a second time-frequency resource allocated for the target terminal for use in the second zone, the first target time-frequency resource being mutually orthogonal to the second target time-frequency resource.

As at least one alternative embodiment, the resource allocation information includes information of the first target time-frequency resource allocated for the target terminal for use in the present zone and information of the second target time-frequency resource allocated for the target terminal for use in the second zone, the second zone is a zone towards which the target terminal is moving and which is adjacent to the present zone, and the first target time-frequency resource and the second target time-frequency resource are mutually orthogonal.

As at least one alternative embodiment, the network-side device is the base station.

As at least one alternative embodiment, the target terminal is a vehicular terminal, the network-side device is a first RSU and the first RSU is configured to allocate the time-frequency resource for the vehicular terminal in the cell under the coverage of the base station.

As at least one alternative embodiment, the processor 830 is configured to receive the communication request through another RSU through the transceiver 820.

As at least one alternative embodiment, the first RSU belongs to a CRSU set, each CRSU in the CRSU set corresponds to a zone in the multiple zones and the CRSU is configured to allocate the time-frequency resource for the vehicular terminal in a corresponding zone.

In addition, terms "system" and "network" in the present disclosure may usually be exchanged in the present disclosure. In the present disclosure, term "and/or" is only an association relationship describing associated objects and represents that three relationships may exist. For example, A and/or B may represent three conditions: i.e., independent existence of A, existence of both A and B and independent existence of B. Moreover, character "/" in the present disclosure usually represents that previous and next associated objects form an "or" relationship.

It is to be understood that, in the embodiments of the present disclosure, "B corresponding to A" represents that B is associated with A and B may be determined according to A. It is also to be understood that determining B according to A does not mean that B is determined only according to A and B may also be determined according to A and/or other information.

It is to be understood that, in various embodiments of the present disclosure, a magnitude of a sequence number of each process does not mean an execution sequence and the execution sequence of each process should be determined by its function and an internal logic and should not form any limit to an implementation process of the embodiments of the present disclosure.

It is to be understood that the processor in the embodiment of the present disclosure may be an integrated circuit chip and has a signal processing capability. In an implementation process, each step of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the present disclosure may be implemented or executed. The universal processor may be a microprocessor or the processor may also be any conventional processor and the like. The steps of the methods disclosed in combination with the embodiments of the present disclosure may be directly embodied to be executed and completed by a hardware decoding processor or executed and completed by a combination of hardware and software components in the decoding processor. The software component may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps of the methods in combination with hardware.

It can be understood that the memory in the embodiment of the present disclosure may be a volatile memory or a nonvolatile memory, or may include both the volatile and nonvolatile memories, wherein the nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the present disclosure is intended to include, but not limited to, memories of these and any other proper types.

Those of ordinary skill in the art may realize that the units and algorithm steps of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, device and unit described above may refer to the corresponding processes in the method embodiments and will not be elaborated herein for convenient and brief description.

In some embodiments provided by the present disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the present disclosure may be integrated into a processing unit, each unit may also exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation mode of the present disclosure and not intended to limit the scope of protection of the claims.

## Claims

1. A communication method, comprising:
receiving (S301), by a target terminal, resource allocation information sent by a network, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal; and
performing (S302), by the target terminal, communication by using the target time-frequency resource according to the resource allocation information;
**characterized in that**
time-frequency resources allocated for terminals of different types in a same zone in the multiple zones are mutually orthogonal.

2. The communication method as claimed in claim 1, wherein a type of the target terminal comprises one of: a vehicular terminal and a cellular terminal.

3. The communication method as claimed in claim 1 or 2, further comprising:
sending, by the target terminal, a communication request to the network, the communication request being configured to request for allocating, for the target terminal, a time-frequency resource required by communication.

4. The communication method as claimed in claim 3, wherein the communication request comprises position information of the target terminal, so as to enable the network to determine, according to the position information of the target terminal, the target time-frequency resource allocated for the target terminal.

5. The communication method as claimed in claim 3 or 4, wherein the communication request comprises at least one of: geographical position information of the target terminal, speed information of the target terminal and moving direction information of the target terminal.

6. The communication method as claimed in any one of claims 1 to 5, wherein the resource allocation information comprises information of a first target time-frequency resource allocated for the target terminal for use in a present zone and information of a second target time-frequency resource allocated for the target terminal for use in a second zone, the second zone is a zone towards which the target terminal is moving and which is adjacent to the present zone, and the first target time-frequency resource and the second target time-frequency resource are mutually orthogonal.

7. The communication method as claimed in any one of claims 1 to 6, wherein the target terminal is a vehicular terminal and receiving, by the target terminal, the resource allocation information sent by the network comprises:
receiving, by the target terminal, the resource allocation information sent by a first Roadside Unit, RSU, the first RSU being configured to allocate time-frequency resources for vehicular terminals in the cell under the coverage of the base station.

8. The communication method as claimed in any one of claims 1 to 7, wherein receiving, by the target terminal, the resource allocation information sent by the network comprises:
receiving, by the target terminal, the resource allocation information sent by the base station.

9. A communication method, comprising:
receiving (S401), by a network-side device, a communication request of a target terminal, the communication request being configured to request for allocating, for the target terminal, a time-frequency resource required by communication; and
sending (S402), by the network-side device, resource allocation information to the target terminal, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal;
**characterized in that**
time-frequency resources allocated for terminals of different types in a same zone in the multiple zones are mutually orthogonal.

10. The communication method as claimed in claim 9, wherein a type of the target terminal comprises one of: a vehicular terminal and a cellular terminal.

11. The communication method as claimed in claim 9 or 10, wherein the communication request comprises position information of the target terminal, and the communication method further comprises:
determining, by the network-side device according to the communication request, a zone where the target terminal is located; and
determining, by the network-side device, the target time-frequency resource according to the zone where the target terminal is located.

12. A terminal (700), comprising:
at least one processor (730); and
a computer readable storage (710), coupled to the at least one processor and storing at least one computer executable instructions thereon, which when the at least one computer executable instructions is executed by the at least one processor, cause the at least one processor to carry out following actions:
receiving (S301) resource allocation information sent by a network, the resource allocation information being configured to indicate a target time-frequency resource allocated for the terminal (700), the terminal (700) being located in a cell under coverage of a base station, the cell being divided into multiple zones, and time-frequency resources allocated for terminals of a same type in any two adjacent zones in the multiple zones being mutually orthogonal; and
performing (S302) communication by using the target time-frequency resource according to the resource allocation information;
**characterized in that**
time-frequency resources allocated for terminals of different types in a same zone in the multiple zones are mutually orthogonal.

13. A network-side device (800), comprising:
at least one processor (830); and
a computer readable storage (810), coupled to the at least one processor and storing at least one computer executable instructions thereon, which when the at least one computer executable instructions is executed by the at least one processor, cause the at least one processor to carry out following actions:
receiving (S401) a communication request of a target terminal, the communication request being configured to request for allocating, for the target terminal, a time-frequency resource required by communication; and
sending (S402) resource allocation information to the target terminal, the resource allocation information being configured to indicate a target time-frequency resource allocated for the target terminal, the target terminal being located in a cell under coverage of a base station, the cell being divided into multiple zones, and time-frequency resources allocated for terminals of a same type in any two adjacent zones in the multiple zones being mutually orthogonal;
**characterized in that**
time-frequency resources allocated for terminals of different types in a same zone in the multiple zones are mutually orthogonal.

## Patentansprüche

1. Kommunikationsverfahren, das Folgendes umfasst:
Empfangen (S301), durch ein Zielendgerät, von Ressourcenzuweisungsinformationen, die durch ein Netz gesendet werden, wobei die Ressourcenzuweisungsinformationen dazu ausgelegt sind, eine dem Zielendgerät zugewiesene Ziel-Zeit-Frequenz-Ressource anzugeben, wobei sich das Zielendgerät in einer durch eine Basisstation abgedeckten Zelle befindet, wobei die Zelle in mehrere Zonen unterteilt ist und Endgeräten desselben Typs zugewiesene Zeit-Frequenz-Ressourcen in zwei beliebigen benachbarten Zonen in den mehreren Zonen zueinander orthogonal sind; und
Durchführen (S302), durch das Zielendgerät, einer Kommunikation unter Verwendung der Ziel-Zeit-Frequenz-Ressource gemäß den Ressourcenzuweisungsinformationen;
**dadurch gekennzeichnet, dass**
Endgeräten unterschiedlicher Typen zugewiesene Zeit-Frequenz-Ressourcen in derselben Zone in den mehreren Zonen zueinander orthogonal sind.

2. Kommunikationsverfahren nach Anspruch 1, wobei ein Typ des Zielendgeräts eines der folgenden umfasst: ein Fahrzeugendgerät und ein zellulares Endgerät.

3. Kommunikationsverfahren nach Anspruch 1 oder 2, das ferner Folgendes umfasst:
Senden, durch das Zielendgerät, einer Kommunikationsanforderung zu dem Netz, wobei die Kommunikationsanforderung dazu ausgelegt ist, eine Zuweisung einer durch eine Kommunikation benötigten Zeit-Frequenz-Ressource für das Zielendgerät anzufordern.

4. Kommunikationsverfahren nach Anspruch 3, wobei die Kommunikationsanforderung Positionsinformationen des Zielendgeräts umfasst, sodass dem Netz ermöglicht wird, gemäß den Positionsinformationen des Zielendgeräts die dem Zielendgerät zugewiesene Ziel-Zeit-Frequenz-Ressource zu bestimmen.

5. Kommunikationsverfahren nach Anspruch 3 oder 4, wobei die Kommunikationsanforderung mindestens eines der Folgenden umfasst: geografische Positionsinformationen des Zielendgeräts, Geschwindigkeitsinformationen des Zielendgeräts und Bewegungsrichtungsinformationen des Zielendgeräts.

6. Kommunikationsverfahren nach einem der Ansprüche 1 bis 5, wobei die Ressourcenzuweisungsinformationen Informationen einer ersten Ziel-Zeit-Frequenz-Ressource, die dem Zielendgerät zur Verwendung in einer gegenwärtigen Zone zugewiesen wird, und Informationen einer zweiten Ziel-Zeit-Frequenz-Ressource, die dem Zielendgerät zur Verwendung in einer zweiten Zone zugewiesen wird, umfassen, wobei die zweite Zone eine Zone ist, zu der sich das Zielendgerät bewegt und die benachbart zu der gegenwärtigen Zone ist, und die erste Ziel-Zeit-Frequenz-Ressource und die zweite Ziel-Zeit-Frequenz-Ressource zueinander orthogonal sind.

7. Kommunikationsverfahren nach einem der Ansprüche 1 bis 6, wobei das Zielendgerät ein Fahrzeugendgerät ist, und das Empfangen, durch das Zielendgerät, der Ressourcenzuweisungsinformationen, die durch das Netz gesendet werden, Folgendes umfasst:
Empfangen, durch das Zielendgerät, der Ressourcenzuweisungsinformationen, die durch eine erste Road Side Unit bzw. RSU gesendet werden, wobei die erste RSU dazu ausgelegt ist, Fahrzeugendgeräten in der durch die Basisstation abgedeckten Zelle Zeit-Frequenz-Ressourcen zuzuweisen.

8. Kommunikationsverfahren nach einem der Ansprüche 1 bis 7, wobei das Empfangen, durch das Zielendgerät, der Ressourcenzuweisungsinformationen, die durch das Netz gesendet werden, Folgendes umfasst:
Empfangen, durch das Zielendgerät, der Ressourcenzuweisungsinformationen, die durch die Basisstation gesendet werden.

9. Kommunikationsverfahren, das Folgendes umfasst:
Empfangen (S401), durch eine netzseitige Vorrichtung, einer Kommunikationsanforderung eines Zielendgeräts, wobei die Kommunikationsanforderung dazu ausgelegt ist, eine Zuweisung einer durch eine Kommunikation benötigten Zeit-Frequenz-Ressource für das Zielendgerät anzufordern; und
Senden (S402), durch die netzseitige Vorrichtung, von Ressourcenzuweisungsinformationen zu dem Zielendgerät, wobei die Ressourcenzuweisungsinformationen dazu ausgelegt sind, eine dem Zielendgerät zugewiesene Ziel-Zeit-Frequenz-Ressource anzugeben, wobei sich das Zielendgerät in einer durch eine Basisstation abgedeckten Zelle befindet, wobei die Zelle in mehrere Zonen unterteilt ist und Endgeräten desselben Typs zugewiesene Zeit-Frequenz-Ressourcen in zwei beliebigen benachbarten Zonen in den mehreren Zonen zueinander orthogonal sind;
**dadurch gekennzeichnet, dass**
Endgeräten unterschiedlicher Typen zugewiesene Zeit-Frequenz-Ressourcen in derselben Zone in den mehreren Zonen zueinander orthogonal sind.

10. Kommunikationsverfahren nach Anspruch 9, wobei ein Typ des Zielendgeräts eines der folgenden umfasst:
ein Fahrzeugendgerät und ein zellulares Endgerät.

11. Kommunikationsverfahren nach Anspruch 9 oder 10, wobei die Kommunikationsanforderung Positionsinformationen des Zielendgeräts umfasst, und das Kommunikationsverfahren ferner Folgendes umfasst:
Bestimmen, durch die netzseitige Vorrichtung gemäß der Kommunikationsanforderung, einer Zone, in der sich das Zielendgerät befindet; und
Bestimmen, durch die netzseitige Vorrichtung, der Ziel-Zeit-Frequenz-Ressource gemäß der Zone, in der sich das Zielendgerät befindet.

12. Endgerät (700), das Folgendes umfasst:
mindestens einen Prozessor (730); und
eine computerlesbare Speicherung (710), die mit dem mindestens einen Prozessor gekoppelt ist und mindestens eine computerausführbare Anweisung darauf speichert, die, wenn die mindestens eine computerausführbare Anweisung durch den mindestens einen Prozessor ausgeführt wird, veranlasst, dass der mindestens eine Prozessor die folgenden Handlungen ausführt:
Empfangen (S301) von Ressourcenzuweisungsinformationen, die durch ein Netz gesendet werden, wobei die Ressourcenzuweisungsinformationen dazu ausgelegt sind, eine dem Endgerät (700) zugewiesene Ziel-Zeit-Frequenz-Ressource anzugeben, wobei sich das Endgerät (700) in einer durch eine Basisstation abgedeckten Zelle befindet, wobei die Zelle in mehrere Zonen unterteilt ist und Endgeräten desselben Typs zugewiesene Zeit-Frequenz-Ressourcen in zwei beliebigen benachbarten Zonen in den mehreren Zonen zueinander orthogonal sind; und
Durchführen (S302) einer Kommunikation unter Verwendung der Ziel-Zeit-Frequenz-Ressource gemäß den Ressourcenzuweisungsinformationen;
**dadurch gekennzeichnet, dass**
Endgeräten unterschiedlicher Typen zugewiesene Zeit-Frequenz-Ressourcen in derselben Zone in den mehreren Zonen zueinander orthogonal sind.

13. Netzseitige Vorrichtung (800), die Folgendes umfasst:
mindestens einen Prozessor (830); und
eine computerlesbare Speicherung (810), die mit dem mindestens einen Prozessor gekoppelt ist und mindestens eine computerausführbare Anweisung darauf speichert, die, wenn die mindestens eine computerausführbare Anweisung durch den mindestens einen Prozessor ausgeführt wird, veranlasst, dass der mindestens eine Prozessor die folgenden Handlungen ausführt:
Empfangen (S401) einer Kommunikationsanforderung eines Zielendgeräts, wobei die Kommunikationsanforderung dazu ausgelegt ist, eine Zuweisung einer durch eine Kommunikation benötigten Zeit-Frequenz-Ressource für das Zielendgerät anzufordern; und
Senden (S402) von Ressourcenzuweisungsinformationen zu dem Zielendgerät, wobei die Ressourcenzuweisungsinformationen dazu ausgelegt sind, eine dem Zielendgerät zugewiesene Ziel-Zeit-Frequenz-Ressource anzugeben, wobei sich das Zielendgerät in einer durch eine Basisstation abgedeckten Zelle befindet, wobei die Zelle in mehrere Zonen unterteilt ist und Endgeräten desselben Typs zugewiesene Zeit-Frequenz-Ressourcen in zwei beliebigen benachbarten Zonen in den mehreren Zonen zueinander orthogonal sind;
**dadurch gekennzeichnet, dass**
Endgeräten unterschiedlicher Typen zugewiesene Zeit-Frequenz-Ressourcen in derselben Zone in den mehreren Zonen zueinander orthogonal sind.

## Revendications

1. Procédé de communication, comprenant :
la réception (S301) par un terminal cible, d'informations d'attribution de ressources envoyées par un réseau, les informations d'attribution de ressources étant configurées pour indiquer une ressource temps-fréquence cible attribuée au terminal cible, le terminal cible se trouvant dans une cellule couverte par une station de base, la cellule étant divisée en de multiples zones, et des ressources temps-fréquence attribuées à des terminaux d'un même type dans deux zones adjacentes quelconques dans les multiples zones étant mutuellement orthogonales ; et
la réalisation (S302), par le terminal cible, d'une communication au moyen de la ressource temps-fréquence cible conformément aux informations d'attribution de ressources ;
**caractérisé en ce que**
des ressources temps-fréquence attribuées à des terminaux de différents types dans une même zone dans les multiples zones sont mutuellement orthogonales.

2. Procédé de communication selon la revendication 1, dans lequel un type du terminal cible comprend l'un : d'un terminal véhiculaire et d'un terminal cellulaire.

3. Procédé de communication selon la revendication 1 ou 2, comprenant en outre :
l'envoi, par le terminal cible, d'une demande de communication au réseau, la demande de communication étant configurée pour demander l'attribution, au terminal cible, d'une ressource temps-fréquence requise par la communication.

4. Procédé de communication selon la revendication 3, dans lequel la demande de communication comprend des informations de position du terminal cible, de manière à permettre au réseau de déterminer, conformément aux informations de position du terminal cible, la ressource temps-fréquence cible attribuée au terminal cible.

5. Procédé de communication selon la revendication 3 ou 4, dans lequel la demande de communication comprend : des informations de position géographique du terminal cible et/ou des informations de vitesse du terminal cible et/ou des informations de sens de déplacement du terminal cible.

6. Procédé de communication selon l'une quelconque des revendications 1 à 5, dans lequel les informations d'attribution de ressources comprennent des informations d'une première ressource temps-fréquence cible attribuée au terminal cible en vue de son utilisation dans une zone actuelle et des informations d'une seconde ressource temps-fréquence cible attribuée au terminal cible en vue de son utilisation dans une seconde zone, la seconde zone est une zone vers laquelle se déplace le terminal cible et adjacente à la zone actuelle, et la première ressource temps-fréquence cible et la seconde ressource temps-fréquence cible sont mutuellement orthogonales.

7. Procédé de communication selon l'une quelconque des revendications 1 à 6, dans lequel le terminal cible est un terminal véhiculaire et la réception, par le terminal cible, des informations d'attribution de ressources envoyées par le réseau comprend :
la réception, par le terminal cible, des informations d'attribution de ressources envoyées par une première unité de bord de route, RSU, la première RSU étant configurée pour attribuer des ressources temps-fréquence à des terminaux véhiculaires dans la cellule couverte par la station de base.

8. Procédé de communication selon l'une quelconque des revendications 1 à 7, dans lequel la réception, par le terminal cible, des informations d'attribution de ressources envoyées par le réseau comprend :
la réception, par le terminal cible, des informations d'attribution de ressources envoyées par la station de base.

9. Procédé de communication, comprenant :
la réception (S401), par un dispositif côté réseau, d'une demande de communication d'un terminal cible, la demande de communication étant configurée pour demander l'attribution, au terminal cible, d'une ressource temps-fréquence requise par la communication ; et
l'envoi (S402), par le dispositif côté réseau, d'informations d'attribution de ressources au terminal cible, les informations d'attribution de ressources étant configurées pour indiquer une ressource temps-fréquence cible attribuée au terminal cible, le terminal cible se trouvant dans une cellule couverte par une station de base, la cellule étant divisée en de multiples zones, et des ressources temps-fréquence attribuées à des terminaux d'un même type dans deux zones adjacentes quelconques dans les multiples zones étant mutuellement orthogonales ;
**caractérisé en ce que**
des ressources temps-fréquence attribuées à des terminaux de différents types dans une même zone dans les multiples zones sont mutuellement orthogonales.

10. Procédé de communication selon la revendication 9, dans lequel un type du terminal cible comprend l'un : d'un terminal véhiculaire et d'un terminal cellulaire.

11. Procédé de communication selon la revendication 9 ou 10, dans lequel la demande de communication comprend des informations de position du terminal cible, et le procédé de communication comprenant en outre :
la détermination, par le dispositif côté réseau conformément à la demande de communication, d'une zone dans laquelle se trouve le terminal cible ; et
la détermination, par le dispositif côté réseau, de la ressource temps-fréquence cible conformément à la zone dans laquelle se trouve le terminal cible.

12. Terminal (700), comprenant :
au moins un processeur (730) ; et
une mémoire lisible par ordinateur (710), couplée à l'au moins un processeur et mémorisant au moins une instruction exécutable par ordinateur, qui, quand l'au moins une instruction exécutable par ordinateur est exécutée par l'au moins un processeur, amène l'au moins un processeur à réaliser les actions suivantes :
recevoir (S301) des informations d'attribution de ressources envoyées par un réseau, les informations d'attribution de ressources étant configurées pour indiquer une ressource temps-fréquence cible attribuée au terminal (700), le terminal (700) se trouvant dans une cellule couverte par une station de base, la cellule étant divisée en de multiples zones, et des ressources temps-fréquence attribuées à des terminaux d'un même type dans deux zones adjacentes quelconques dans les multiples zones étant mutuellement orthogonales ; et
réaliser (S302) une communication au moyen de la ressource temps-fréquence cible conformément aux informations d'attribution de ressources ;
**caractérisé en ce que**
des ressources temps-fréquence attribuées à des terminaux de différents types dans une même zone dans les multiples zones sont mutuellement orthogonales.

13. Dispositif côté réseau (800), comprenant :
au moins un processeur (830) ; et
une mémoire lisible par ordinateur (810), couplée à l'au moins un processeur et mémorisant au moins une instruction exécutable par ordinateur, qui, quand l'au moins une instruction exécutable par ordinateur est exécutée par l'au moins un processeur, amène l'au moins un processeur à réaliser les actions suivantes :
recevoir (S401) une demande de communication d'un terminal cible, la demande de communication étant configurée pour demander l'attribution, au terminal cible, d'une ressource temps-fréquence requise par la communication ; et
envoyer (S402) des informations d'attribution de ressources au terminal cible, les informations d'attribution de ressources étant configurées pour indiquer une ressource temps-fréquence cible attribuée au terminal cible, le terminal cible se trouvant dans une cellule couverte par une station de base, la cellule étant divisée en de multiples zones, et des ressources temps-fréquence attribuées à des terminaux d'un même type dans deux zones adjacentes quelconques dans les multiples zones étant mutuellement orthogonales;
**caractérisé en ce que**
des ressources temps-fréquence attribuées à des terminaux de différents types dans une même zone dans les multiples zones sont mutuellement orthogonales.
